# EUROPEAN PATENT SPECIFICATION

(11) **EP 2 947 801 B1**
(45) Date of publication and mention of the grant of the patent: **04.07.2018**
(21) Application number: 15168160.8
(22) Date of filing: 19.05.2015
(51) Int. Cl.: H04L 1/08, H04L 1/18

(54) **EARLY TERMINATION OF UPLINK TRANSMISSIONS ON A DEDICATED CHANNEL**
FRÜHER ABSCHLUSS VON ÜBERTRAGUNGEN IN AUFWÄRTSRICHTUNG ÜBER EINEN DEDIZIERTEN KANAL
TERMINAISON PRÉCOCE DES ÉMISSIONS EN LIAISON MONTANTE SUR UN CANAL DÉDIÉ

(30) Priority: 19.05.2014 US 201462000165 P
(43) Date of publication of application: 25.11.2015
(73) Proprietor: MediaTek Inc., Hsin-Chu (TW)
(72) Inventor: Tsai, Jeng-Yi, Hsinchu City 300 (TW)
(74) Representative: Sticht, Andreas

(56) References cited:
- QUALCOMM INCORPORATED: "UL FET design considerations", 3GPP DRAFT; R1-142567_UL FET DESIGN CONSIDERATIONS, 3RD GENERATION PARTNERSHIP PROJECT (3GPP), MOBILE COMPETENCE CENTRE , vol. RAN WG1 18 May 2014 (2014-05-18), pages 1-5, XP050789678, SOPHIA-ANTIPOLIS CEDEX ; FRANCE Retrieved from the Internet: URL:http://www.3gpp.org/ftp/Meetings_3GPP_ SYNC/RAN1/RAN1/Docs/ [retrieved on 2014-05-18]
- MEDIATEK INC: "TP on DCH Enhancements", 3GPP DRAFT; R1-133298_TP_ON_DCH_ENHANCEMENTS, 3RD GENERATION PARTNERSHIP PROJECT (3GPP), MOBILE COMPETENCE CENTRE , vol. RAN WG1 10 August 2013 (2013-08-10), XP050716448, SOPHIA-ANTIPOLIS CEDEX ; FRANCE Retrieved from the Internet: URL:http://www.3gpp.org/ftp/tsg_ran/WG1_RL 1/TSGR1_74/Docs/ [retrieved on 2013-08-10]
- "3rd Generation Partnership Project; Technical Specification Group Radio Access Network; Study on Dedicated Channel (DCH) enhancements for UMTS (Release 12)", 3GPP DRAFT; 25702-C10, 3RD GENERATION PARTNERSHIP PROJECT (3GPP), MOBILE COMPETENCE CENTRE , 12 December 2013 (2013-12-12), XP050906837, SOPHIA-ANTIPOLIS CEDEX ; FRANCE Retrieved from the Internet: URL:http://www.3gpp.org/ftp/Specs/2014-12/ Rel-12/25_series/ [retrieved on 2013-12-12]
- QUALCOMM INCORPORATED: "Analysis of Rate-Matching and Interleaving Enhancements", 3GPP DRAFT; R1-135776_ANALYSIS OF RATE-MATCHING AND INTERLEAVING ENHANCEMENTS, 3RD GENERATION PARTNERSHIP PROJECT (3GPP), MOBILE COMPETENCE CENTRE , vol. RAN WG1 13 November 2013 (2013-11-13), XP050735421, SOPHIA-ANTIPOLIS, FRANCE Retrieved from the Internet: URL:http://www.3gpp.org/ftp/Meetings_3GPP_ SYNC/RAN/RAN1/Docs/ [retrieved on 2013-11-13]

## Description

### BACKGROUND OF THE INVENTION

### Field of the Invention

The present invention relates to a handheld device, a base station and transmission control methods thereof. More particularly, the handheld device of the present invention transmits an uplink signal in which every two consecutive radio frames of an uplink dedicated physical data channel (UL DPDCH) repeatedly carry a dedicated traffic channel (DTCH) information data and a part of a dedicated control channel (DCCH) information data .

### Descriptions of the Related Art

With the development of wireless communication technologies, wireless devices have been widely used. To satisfy users' overwhelming demands for communication, various telecommunication standards have been developed. Universal mobile telecommunications system frequency division duplex (UMTS-FDD) Release 99 system is a version of the third generation (3G) communication system. The UMTS-FDD Release 99 provides circuit-switched speech services in which a circuit-switched connection is established between a user device and a base station. User data and physical layer control information are carried on dedicated physical channels (DPCHs) of the uplink signal and the downlink signal, and the uplink signal and the downlink signal are respectively transmitted in different frequency bands at the same time.

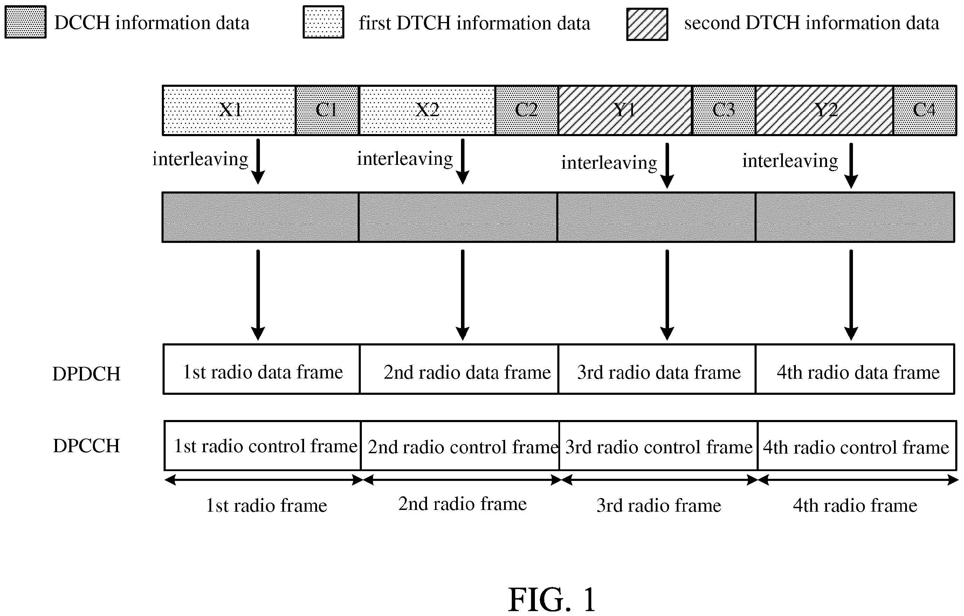

**FIG. 1** depicts the transmission architecture in the normal mode of the existing UMTS-FDD Release 99 system. Each dedicated traffic channel (DTCH) information data (i.e. the processed user data) is carried within two radio frames of an uplink dedicated physical data channel (UL DPDCH) and each dedicated control channel (DCCH) information data (e.g. the processed signaling information data) is carried within four radio frames of the UL DPDCH. Specifically, the two segments **X1, X2** of a first DTCH information data are generated from a user data through several processes such as CRC attachment, tail bit attachment, coding, interleaving, radio frame segmentation and rate matching. Similarly, the two segments **Y1, Y2** of a second DTCH information data are generated from a user data through the above processes, and the four segments **C1, C2, C3, C4** of a DCCH information data are generated from a signaling information data through the above processes.

The segment **X1** of the first DTCH information data and the segment **C1** of the DCCH information data are carried in a first radio data frame of the DPDCH after further interleaving. Then, the segment **X2** of the first DTCH information data and the segment **C2** of the DCCH information data are carried in a second radio data frame of the DPDCH after further interleaving. Similarly, the segment **Y1** of the second DTCH information data and the segment **C3** of the DCCH information data are carried in a third data radio frame of the DPDCH after further interleaving. Afterwards, the segment **Y2** of the second DTCH information data and the segment **C4** of the DCCH information data are carried in a fourth radio data frame of the DPDCH after further interleaving.

In the above transmission architecture, it is hard for base station to successfully decode the DTCH information data and/or the DCCH information data earlier since the probability of successfully decoding the DTCH information data and the DCCH information data is proportional to the received amount thereof. As a result, the uplink radio frame early termination is almost unachievable under the current transmission architecture of the UMTS-FDD Release 99 system.

In addition, QUALCOMM (QUALCOMM INCORPORATED: "UL FET design considerations", 3GPP DRAFT; R1-142567_UL FET DESIGN CONSIDERATIONS, 3RD GENERATION PARTNERSHIP PROJECT (3GPP), MOBILE COMPETENCE CENTRE; vol. RAN WG1 18 May 2014 (2014-05-18), pages 1-5, XP050789678, SOPHIA-ANTIPOLIS CEDEX; FRANCE) teaches that the DTCH packets and the DTCH packets can be compressed and repeatedly transmitted in two 10ms-durations of the UL DPDCH to achieve the UL FET.

Besides, MEDIATEK (MEDIATEK INC: "TP on DCH Enhancements", 3GPP DRAFT; R1-133298_TP_ON_DCH_ENHANCEMENTS, 3RD GENERATION PARTNERSHIP PROJECT (3GPP), MOBILE COMPETENCE CENTRE, vol. RAN WG1 10 August 2013 (2013-08-10), XP050716448, SOPHIA-ANTIPOLIS CEDEX; FRANCE) also teaches that the DTCH packets and the DTCH packets can be compressed and repeatedly transmitted in two 10ms-durations of the UL DPDCH to achieve the UL FET.

Accordingly, an urgent need exists in the art to provide a transmission architecture which makes early decoding of the DTCH information data and the DCCH information data by the base station possible so as to achieve the uplink radio frame early termination.

### SUMMARY OF THE INVENTION

The objective of the present invention is to provide a transmission architecture in which DTCH information data and a part of the DCCH information data are repeatedly carried in two consecutive radio frames of UL DPDCH within two radio frames so that the base station may successfully decode the DTCH information data and the DCCH information data earlier and transmit an acknowledgement command (ACK command) to inform the user device of the decoding results. As a result, in the transmission architecture of the present invention, the uplink radio frame early termination is achievable so as to reduce the power consumption and the signal interference on both the user device and the base station and increase the overall system performance.

A handheld device as defined in claim 1, a method as defined in claim 7, a base station as defined in claim 8 and a method as defined in claim 15 are provided. The dependent claims define further embodiments. Features defined in the claims dependent from claims 1 and 8, respectively, may also be used in the method of claims 7 and 15, respectively.

To achieve the aforesaid objective, the present invention discloses a handheld device which comprises a processor and a transceiver. The processor is configured to generate an uplink signal. The transceiver is electrically connected to the processor and configured to transmit the uplink signal to a base station. The uplink signal comprises an uplink dedicated physical data channel (UL DPDCH) including a first radio data frame, a second radio data frame, a third radio data frame and a fourth radio data frame within two transmission time intervals (TTIs). A first dedicated traffic channel (DTCH) information data and first two segments of a dedicated control channel (DCCH) information data are repeatedly carried in the first and second radio data frames, and a second DTCH information data and last two segments of the DCCH information data are repeatedly carried in the third and fourth radio data frames.

In addition, the present invention further discloses a transmission control method for use in a handheld device. The handheld device comprises a processor and a transceiver. The transceiver is electrically connected to the processor. The transmission control method comprises the following steps: generating, by the processor, an uplink signal; and transmitting, by the transceiver, the uplink signal to a base station. The uplink signal comprises an uplink dedicated physical data channel (UL DPDCH) including a first radio data frame, a second radio data frame, a third radio data frame and a fourth radio data frame within two transmission time intervals (TTIs). A first dedicated traffic channel (DTCH) information data and first two segments of a dedicated control channel (DCCH) information data are repeatedly carried in the first and second radio data frames, and a second DTCH information data and last two segments of the DCCH information data are repeatedly carried in the third and fourth radio data frames.

To achieve the aforesaid objective, the present invention further discloses a base station which comprises a transceiver and a processor. The transceiver is configured to receive an uplink signal from a handheld device. The uplink signal comprises an uplink dedicated physical data channel (UL DPDCH) including a first radio data frame, a second radio data frame, a third radio data frame and a fourth radio data frame within two transmission time intervals (TTIs). A first dedicated traffic channel (DTCH) information data and first two segments of a dedicated control channel (DCCH) information data are repeatedly carried in the first and second radio data frames, and a second DTCH information data and last two segments of the DCCH information data are repeatedly carried in the third and fourth radio data frames. The processor is electrically connected to the transceiver and configured to process the uplink signal.

Moreover, the present invention further discloses a transmission control method for use in a base station. The base station comprises a processor and a transceiver. The transceiver is electrically connected to the processor. The transmission control method comprises the following steps: receiving, by the transceiver, an uplink signal from a handheld device, wherein the uplink signal comprises an uplink dedicated physical data channel (UL DPDCH) including a first radio data frame, a second radio data frame, a third radio data frame and a fourth radio data frame within two transmission time intervals (TTIs), a first dedicated traffic channel (DTCH) information data and first two segments of a dedicated control channel (DCCH) information data are repeatedly carried in the first and second radio data frames, and a second DTCH information data and last two segments of the DCCH information data are repeatedly carried in the third and fourth radio data frames; and processing, by the processor, the uplink signal.

The detailed technology and preferred embodiments implemented for the subject invention are described in the following paragraphs accompanying the appended drawings for people skilled in this field to well appreciate the features of the claimed invention.

### BRIEF DESCRIPTION OF THE DRAWINGS

**FIG. 1** is a schematic diagram showing how DTCH information data and DCCH information data are carried in radio data frames of the UL DPDCH in the conventional UMTS-FDD Release 99 system;
**FIG. 2** is a schematic view of a handheld device **2** according to the first embodiment to the fifth embodiment of the present invention;
**FIG. 3** is a schematic diagram showing how DTCH information data and DCCH information data are carried in radio data frames of the UL DPDCH in accordance with the present invention;
**FIG. 4** is a schematic view of a base station **4** according to the first embodiment to the fifth embodiment of the present invention;
**FIG. 5** is a flowchart diagram of a transmission control method according to the sixth embodiment of the present invention; and
**FIG. 6** is a flowchart diagram of a transmission control method according to the seventh embodiment of the present invention.

### DESCRIPTION OF THE PREFERRED EMBODIMENT

The present invention provides a handheld device, a base station and transmission control methods thereof. In the following description, the present invention will be explained with reference to embodiments thereof. It shall be appreciated that theses embodiments of the present invention are not intended to limit the present invention to any specific environment, applications or implementations described in these embodiments. Therefore, the description of these embodiments is only for purpose of illustration rather than to limit the present invention and the scope claimed in this application shall be governed by the claims. Additionally, in the following embodiments and the attached drawings, elements unrelated to the present invention are omitted from depiction; and dimensional relationships among individual elements in the attached drawings are illustrated only for ease of understanding, but not to limit the actual scale.

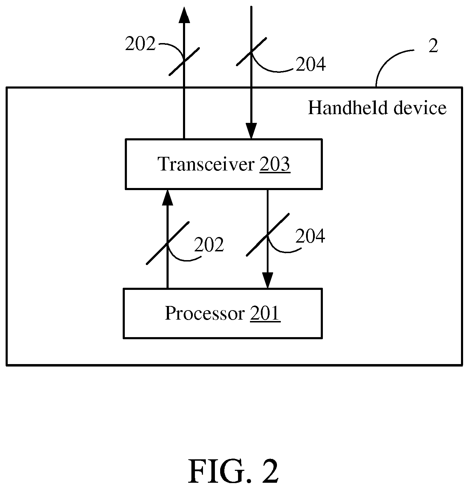

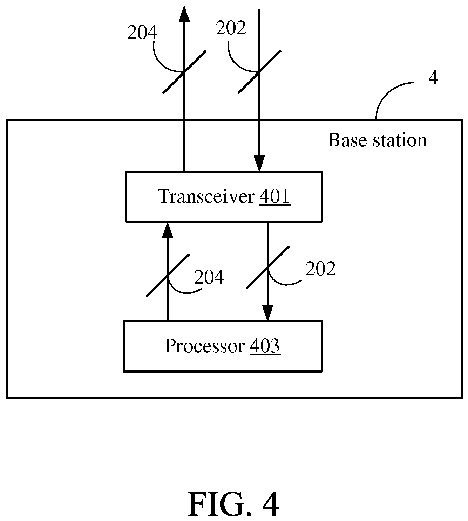

The first embodiment of the present invention is depicted in **FIGs. 2-4****.** **FIG. 2** is a schematic diagram of a handheld device **2.** The handheld device **2** communicates with a base station **4** as shown in **FIG. 4****.** The handheld device **2** and the base station **4** are designed for a UMTS-FDD like system which may be modified from the UMTS-FDD Release 99 system. The handheld device **2** may be a smart phone, a tablet computer, or any other device with communication capability. It shall be noted that for the purpose of simplicity, other elements of the handheld device **2,** such as a display module, an antenna module, a power module and elements less related to the present invention, are all omitted from depiction herein. The following description will focus on the differences between the UMTS-FDD like system of the present invention and the UMTS-FDD Release 99 system.

The handheld device **2** comprises a processor **201** and a transceiver **203.** The transceiver **203** is electronically connected to the processor **201.** When the handheld device **2** communicates with the base station **4,** the processor **201** generates an uplink signal **202.** Afterwards, the transceiver **203** transmits the uplink signal **202** to the base station **4** and receives a downlink signal **204** from the base station **4** simultaneously. In the present invention, there may be acknowledgement (ACK) commands carried in the downlink signal **204** for informing the handheld device **2** of the decoding result of the DTCH information data and the DCCH information data in the transmitted radio data frame.

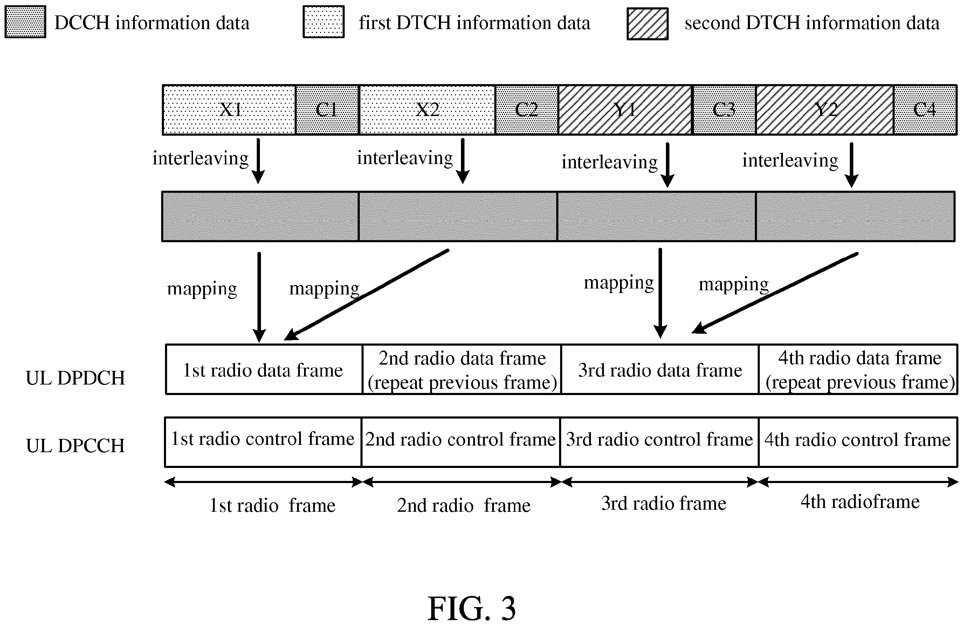

**FIG. 3** depicts the transmission architecture in the normal mode of the UMTS-FDD like system of the present invention, in which there are an uplink dedicated physical data channel (UL DPDCH) and an uplink dedicated physical control channel (UL DPCCH) of the uplink signal within two transmission time intervals TTIs (i.e., four radio frames). The first dedicated traffic channel (DTCH) information data and the second DTCH information data are the processed user data generated by the processor **201,** and the dedicated control channel (DCCH) information data is the processed signaling information data generated by the processor **201.** Since how the DTCH information data and the DCCH information data are generated by the processor **201** are already known in the art, it will not be further described herein.

As shown in **FIG. 3****,** the uplink signal comprises an UL DPDCH including a first radio data frame, a second radio data frame, a third radio data frame and a fourth radio data frame within two TTIs. In the present invention, the complete first DTCH information data (including the two segments **X1, X2)** and the first two segments **C1, C2** of the DCCH information data are carried in the first radio data frame of the UL DPDCH. And, the second radio data frame of the UL DPDCH repeatedly carries the same data (i.e. the two segments **X1, X2** and two segments **C1, C2**) as the first radio data frame. In other words, the first DTCH information data and the two segments **C1, C2** of the DCCH information data are repeatedly carried in the first and second radio data frames. Therefore, the data carried in the first radio data frame of the UL DPDCH is entirely the same as that carried in the second radio data frame of the UL DPDCH.

Similarly, the complete second DTCH information data (including the two segments **Y1, Y2)** and the last two segments **C3, C4** of the DCCH information data are carried in the third radio data frame of the UL DPDCH. Next, the fourth radio data fame of the UL DPDCH repeatedly carries the same data (i.e. the two segments **Y1, Y2** and the two segments **C3, C4**) as the third radio data frame. In other words, the second DTCH information data and the last two segments **C3, C4** of the DCCH information data are repeatedly carried in the third and fourth radio data frames; therefore, the data carried in the third radio data frame of the UL DPDCH is entirely the same as that carried in the fourth radio data frame of the UL DPDCH.

**FIG. 4** is a schematic diagram of the base station **4.** The base station **4** comprises a transceiver **401** and a processor **403.** The transceiver **401** is configured to receive an uplink signal **202** from a handheld device **2.** The processor **403** is electrically connected to the transceiver **401** and configured to process the uplink signal **202.**

The second embodiment of the present invention is also depicted in **FIGs. 2-4****.** As shown in **FIG. 3****,** the uplink signal **202** further comprises an uplink dedicated physical control channel (UL DPCCH) including a first radio control frame, a second radio control frame, a third radio control frame and a fourth radio control frame within the two TTIs. In this embodiment, a first transport format combination indicator (TFCI) is carried in the first radio control frame to indicate a first transmission state which corresponds to the first and second radio data frames, and a second TFCI is carried in the third radio control frame to indicate a second transmission state which corresponds to the third and fourth radio data frames.

The base station **4** decodes the first TFCI firstly to know the states of the first DTCH information data and the DCCH information data. When the first transmission state indicates a mute state of the first DTCH information data and an off-state of the DCCH information data, there is no need for the base station **4** to decode the first DTCH information data and the DCCH information data. In this case, the base station **4** transmits a first ACK command carried in the downlink signal **204** after receiving the first radio data frame from the handheld device **2,** and the first ACK command indicates a non-acknowledgement (NACK) response of the first DTCH information data and the DCCH information data. And, the handheld device **2** can consequently ignores the first ACK command.

Similarly, when the second transmission state indicates the mute state of the second DTCH information data and the off-state of the DCCH information data, the base station **4** does not decode the second DTCH information data and the DCCH information data, and may transmit a second ACK command that indicates the NACK response of the second DTCH information data and the DCCH information data to the handheld device **2.** However, in other embodiments, the base station **4** may not transmit the ACK command that indicates the NACK response of the received DTCH information data and DCCH information data since the ACK command is useless for the handheld device **2** when the DTCH information data is in the mute state and the DCCH information is in the off-state. It is appreciated that the second TFCI indicates the same state of the DCCH information data as that indicated by the first TFCI since the DCCH information data is carried in the first to the fourth radio data frames.

More specifically, on the base station **4** side, the processor **403** decodes the first TFCI firstly to know the states of the first DTCH information data and the DCCH information data. When the first transmission state indicates the mute state of the first DTCH information data and the off-state of the DCCH information data, the processor **403** will not decode the first DTCH information data or the DCCH information data. Moreover, the processor **403** further decodes the second TFCI firstly to know the states of the second DTCH information data. When the second transmission state indicates the mute state of the second DTCH information data and the off-state of the DCCH information data, the processor **403** will not decode the second DTCH information data and the DCCH information data.

In the other case that the first transmission state indicates a non-mute state of the first DTCH information data and an off-state of the DCCH information data, the base station **4** decodes the first DTCH information data after receiving the first radio data frame from the handheld device **2.** Then, the base station **4** transmits the first ACK command carried in the downlink signal **204** to the handheld device **2,** and the first ACK command indicates whether the first DTCH information data has been decoded successfully by the base station **4.** Specifically, the first ACK command indicating the NACK response informs the handheld device **2** that the first DTCH information data has not been successfully decoded yet. And the base station **4** shall decode the first DTCH information data again after receiving the second radio data frame. Conversely, the ACK command indicating the ACK response informs the handheld device **2** that the first DTCH information data has been decoded successfully.

It should be understood that the base station **4** in this embodiment decodes the first DTCH information data once the whole first radio data frame has been received. However, in other embodiments, the base station **4** may decode the first DTCH information data once parts of the first radio data frame has been received. In other words, the base station **4** of the present invention can early decode the first DTCH information data at or before the end of the first radio data frame.

After the transceiver **203** receives the first ACK command carried in the downlink signal **204** from the base station **4,** the processor **201** can terminate transmitting the second radio data frame via the transceiver **203** when the ACK command indicates the ACK response. In detail, once the base station **4** has successfully decoded the first DTCH information data carried in the first radio data frame, the base station **4** will transmit the first ACK command by carrying it in the downlink signal **204** to indicate the ACK response so that the handheld device **2** can terminate transmitting the second radio data frame according to the ACK response. On the other hand, the processor **201** shall keep transmitting the second radio data frame via the transceiver **203** when the ACK command indicates the NACK response. Likewise, when the second transmission state indicates the non-mute state of the second DTCH information data and the off-state of the DCCH information data, the base station **4** decodes the second DTCH information data after receiving the third radio data frame from the handheld device **2.** Then, the base station **4** transmits a second ACK command by carrying it in the downlink signal **204** to the handheld device **2.** The transceiver **203** receives the second ACK command carried in the downlink signal **204** from the base station **4,** and the processor **201** terminates transmitting the fourth radio data frame via the transceiver **203** when the second ACK command indicates the ACK response. On the other hand, the processor **201** shall keep transmitting the fourth radio data frame via the transceiver **203** when the second ACK command indicates the NACK response.

Likewise, it should be understood that the base station **4** in this embodiment decodes the second DTCH information data once the whole the third radio data frame has been received. However, in other embodiments, the base station **4** may decode the second DTCH information data once parts of the third radio data frame have been received. In other words, the base station **4** of the present invention can early decode the second DTCH information data at or before the end of the third radio data frame.

More specifically, on the base station **4** side, the processor **403** decodes the first DTCH information data and generates the first ACK command based on the decoding result of the first DTCH information data. Then, the transceiver **401** further transmits the first ACK command carried in the downlink signal **204** to the handheld device **2** after receiving the first radio data frame (i.e., the first ACK command may be carried in the first or second slot of the second radio frame). As aforementioned, the first ACK command indicates the NACK response if the first DTCH information data has not been decoded successfully yet and the base station **4** shall decode the first DTCH information data again after receiving the second radio data frame; conversely, the first ACK command indicates the ACK response if the first DTCH information data has been decoded successfully.

Afterwards, the processor **403** further decodes the second DTCH information data and generates the second ACK command according to the decoding result of the second DTCH information data. Then, the transceiver **401** further transmits the second ACK command carried in the downlink signal **204** to the handheld device **2** after receiving the third radio data frame (i.e., the second ACK command may be carried in the first or second slot of the fourth radio frame). As aforementioned, the second ACK command indicates the NACK response if the second DTCH information data has not been decoded successfully yet and the base station **4** shall decode the second DTCH information data again after receiving the forth radio data frame; conversely, the second ACK command indicates the ACK response if the second DTCH information data has been decoded successfully.

The third embodiment of the present invention is also depicted in **FIGs. 2-4****.** Unlike the previous embodiments, the state of the DCCH information data in this embodiment is in an on-state, which means there is a signaling information data to be transmitted to the base station **4.** In this embodiment, the base station **4** would not early decode the DTCH information data and the DCCH information data if the first transmission state indicates an on-state of the DCCH information data. In other words, the base station **4** would not decode the DCCH information data until the entire DCCH information data (i.e., the four segments **C1, C2, C3 and C4** of the DCCH information data) has been received.

Specifically, when the first transmission state indicates the on-state of the DCCH information data, the processor **403** of the base station **4** generates the first ACK command indicating a NACK response. And, the transceiver **401** of the base station **4** transmits the first ACK command carried in the downlink signal **204** to the handheld device **2** after receiving the first radio data frame. And the base station **4** would decode the first DTCH information data after receiving the second radio data frame. On the other hand, the handheld device **2** may ignore the first ACK command from the base station **4** and continue to transmit the second radio data frame.

Since the second TFCI indicates the same state of the DCCH information data as that indicated by the first TFCI, the processor **403** of the base station **4** generates the second ACK command indicating the NACK response. And, the transceiver **401** of the base station **4** transmits the second ACK command carried in the downlink signal **204** to the handheld device **2** after receiving the third radio data frame. And the base station **4** would decode the second DTCH information data after receiving the forth radio data frame. On the other hand, the handheld device **2** may ignore the second ACK command from the base station **4** and continue to transmit the fourth radio data frame. In other words, the uplink radio data frame early termination would not be performed during the two TTIs.

It is noted that the first/second transmission state may also indicate either the mute state or the non-mute state of the first DTCH information data; however, no matter which kind of state of the first/second DTCH information data is, the base station **4** would not early decode the first/second DCCH information data as long as the first/second transmission state indicates the on-state of the DCCH information data.

The fourth embodiment of the present invention is also depicted in **FIGs. 2-4****.** In this embodiment, when the first transmission state indicates the on-state of the DCCH information data, the base station **4** decodes the first DTCH information data and the DCCH information data firstly and then transmits the first ACK command carried in the downlink signal **204** to the handheld device **2** after receiving the first radio data frame from the handheld device **2.** Thus, the transceiver **203** of the handheld device **2** will receive the first ACK command carried in the downlink signal **204** from the base station **4,** and the processor **201** of the handheld device **2** terminates transmitting the second radio data frame via the transceiver **203** when the first ACK command indicates an ACK response. On the other hand, the processor **201** shall keep transmitting the second radio data frame via the transceiver **203** when the first ACK command indicates the NACK response.

Specifically, the first ACK command indicating the ACK response means that both the first DTCH information data and the DCCH information data have been decoded successfully. Otherwise, the first ACK command indicating the NACK response means that at least one of the first DTCH information data and the DCCH information data has not been decoded successfully yet and the base station **4** shall decode the first DTCH information data and/or the DCCH information data again after receiving the second radio data frame. In the case that the DCCH information data carried in the first and the second data frames has been decoded successfully based on the first two segments of the DCCH information data, the base station **4** will not decode the DCCH information data carried in the third and fourth data frames again; instead, the base station **4** will only decode the second DTCH information data consequently and then transmits the second ACK command carried in the downlink signal **204** to the handheld device **2** after receiving the third radio data frame from the handheld device **2.** Therefore, the transceiver **203** of the handheld device **2** receives the second ACK command carried in the downlink signal **204** from the base station **4,** and the processor **201** terminates transmitting the fourth radio data frame via the transceiver **203** when the second ACK command indicates the ACK response. On the other hand, the processor **201** shall keep transmitting the fourth radio data frame via the transceiver **203** when the second ACK command indicates the NACK response.

In the other situation, when the DCCH information data carried in the first and second data frames has not been decoded successfully based on the first two segments of the DCCH information data carried in the first radio data frame, the base station **4** will decode the second DTCH information data and the DCCH information data carried in the third radio data frame and then transmits the second ACK command carried in the downlink signal **204** to the handheld device **2.** The transceiver **203** of the handheld device **2** receives the second ACK command from the base station **4,** and the processor **201** of the handheld device **2** terminates transmitting the fourth radio data frame via the transceiver **203** when the second ACK command indicates the ACK response. On the other hand, the processor **201** shall keep transmitting the fourth radio data frame via the transceiver **203** when the second ACK command indicates the NACK response.

On the base station **4** side, the processor **403** decodes the first DTCH information data and the DCCH information data carried in the first radio data frame and then generates the first ACK command according to a decoding result of the first DTCH information data and the DCCH information data. Then, the transceiver **401** transmits the first ACK command carried in the downlink signal **204** to the handheld device **2** after receiving the first radio frame. As aforementioned, the processor **403** generates the first ACK command indicating the ACK response only when both the first DTCH information data and the DCCH information data have been decoded successfully. Otherwise, the processor **403** generates the first ACK command indicating the NACK response and the base station **4** shall decode the first DTCH and/or DCCH information data again after receiving the second radio data frame.

Next, the processor **403** decodes the second DTCH information data when the DCCH information data carried in the first and the second data frames has been decoded successfully based on the first two segments **C1, C2** of the DCCH information data. In addition, the processor **403** generates the second ACK command according to the decoding result of the second DTCH information data, and then the transceiver **401** transmits the second ACK command carried in the downlink signal **204 to** the handheld device **2** after receiving the third radio data frame. Conversely, if the DCCH information data carried in the first and the second data frames has not been decoded successfully based on the two segments **C1, C2** of the DCCH information data, the processor **403** then decodes the second DTCH information data and the DCCH information data carried in the third radio data frame and generates the second ACK command according to the decoding result of the second DTCH information data and the DCCH information data.

In other words, the base station **4** in this embodiment early decodes the first DTCH information data and the DCCH information data after receiving the first radio data frame from the handheld device **2.** In addition, the base station **4** also early decodes the second DTCH information data (and the DCCH information data if the DCCH information data has not been decoded successfully according to the first two segments of the DCCH information data) after receiving the third radio data frame from the handheld device **2.**

Please also refer to **FIGs. 2-4** for the fifth embodiment of the present invention. Compared to the fourth embodiment, the first ACK command in this embodiment always indicates the NACK response. In other words, the base station **4** in this embodiment would not early decode the first DTCH information data and the DCCH information data based on the first two segments of the DCCH information data when the first transmission state indicates an on-state of the DCCH information data. Instead, the base station **4** in this embodiment only early decodes the second DTCH information data and the DCCH information data carried in the third radio data frame since it is easier for the base station **4** to decode the DCCH information data successfully when the base station **4** receives enough DCCH information data (i.e., both the first two segments **C1, C2** and the last two segments **C3, C4** of the DCCH information data has been received by the base station **4**).

Specifically, the transceiver **401** of the base station **4** transmits the first ACK command carried in the downlink signal **204** to the handheld device **2** after receiving the first radio data frame from the handheld device **2.** Since the first ACK command always indicates the NACK response, the handheld device **2** would not perform the early termination on the second radio data frame. Then the processor **403** of the base station **4** decodes the first DTCH information data at the end of the second radio data frame. Similarly, the present invention is not intended to limit the time point at which the processor **403** decodes the first DTCH information data. Thus, in other embodiments, the processor **403** of the base station **4** may early decode first DTCH information data at the end of the first radio data frame.

Afterwards, the processor **403** decodes the second DTCH information data and the DCCH information data at the end of the third radio data frame and generates the second ACK command according to the decoding result of the second DTCH information data and the DCCH information. Likewise, the second ACK command indicates the ACK response if both the second DTCH information data and the DCCH information data have been decoded successfully. Otherwise, the second ACK command indicates the NACK response. It is noted that the processor **403** in this embodiment decodes the second DTCH information data and the DCCH information data at the end of the third radio data frame. However, in other embodiments, the processor **403** may early decode the second DTCH information data and the DCCH information data once parts of the third radio data frame has been received.

Then, the transceiver **401** transmits the second ACK command carried in the downlink signal **204** to the handheld device **2.** As a result, after the transceiver **203** of the handheld device **2** receives the second ACK command from the base station **4,** the processor **201** of the handheld device **2** terminates transmitting the fourth radio data frame via the transceiver **203** when the second ACK command indicates the ACK response. On the other hand, the processor **201** shall keep transmitting the fourth radio data frame via the transceiver **203** when the second ACK command indicates the NACK response. And the base station **4** shall decode the second DTCH and/or DCCH information data again after receiving the fourth radio data frame.

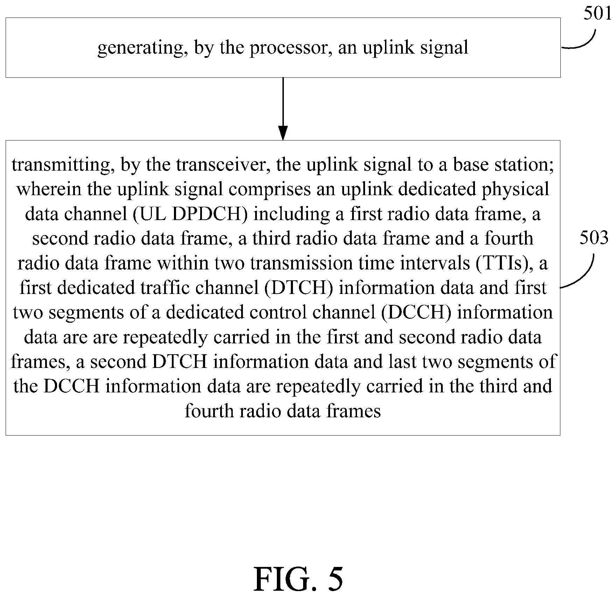

The sixth embodiment of the present invention is a transmission control method, a flow chart of which is shown in **FIG. 5****.** The transmission control method is for use in a handheld device, e.g., the handheld device **2** of the first to fifth embodiments. The handheld device comprises a processor and a transceiver. The transceiver is electrically connected to the processor.

First, step **501** is executed by the processor to generate an uplink signal. Afterwards, step **503** is executed by the transceiver to transmit the uplink signal to a base station. The uplink signal comprises an uplink dedicated physical data channel (UL DPDCH) including a first radio data frame, a second radio data frame, a third radio data frame and a fourth radio data frame within two transmission time intervals (TTIs). A first dedicated traffic channel (DTCH) information data and first two segments of a dedicated control channel (DCCH) information data are repeatedly carried in the first and second radio data frames, and a second DTCH information data and a last two segments of the DCCH information data are repeatedly carried in the third and fourth radio data frames.

In other embodiments, the uplink signal further comprises an uplink dedicated physical control channel (UL DPCCH) including a first radio control frame, a second radio control frame, a third radio control frame and a fourth radio control frame within the two TTIs. A first transport format combination indicator (TFCI) is carried in the first radio control frame to indicate a first transmission state corresponding to the first and second radio data frames, and a second TFCI is carried in the third radio control frame to indicate a second transmission state corresponding to the third and fourth radio data frames.

When the first transmission state indicates a non-mute state of the first DTCH information data and an off-state of the DCCH information data, the base station decodes the first DTCH information data and then transmits a first acknowledgement (ACK) command carried in a downlink signal to the handheld device after receiving the first radio data frame. Therefore, the transmission control method further comprises the following steps of: receiving, by the transceiver, the first ACK command carried in the downlink signal from the base station; and terminating, by the processor, transmitting the second radio data frame via the transceiver when the first ACK command indicates an ACK response.

Likewise, when the second transmission state indicates a non-mute state of the second DTCH information data and the off-state of the DCCH data, the base station decodes the second DTCH information data and then transmits a second ACK command carried in the downlink signal to the handheld device after receiving the third radio data frame. As a result, the transmission control method further comprises the following steps: receiving, by the transceiver, the second ACK command carried in the downlink signal from the base station; and terminating, by the processor, transmitting the fourth radio data frame via the transceiver when the ACK command indicates the ACK response.

In another embodiment, when the first transmission state indicates an on-state of the DCCH information data, and the base station always transmits the first ACK command indicating a negative-acknowledgement (NACK) response carried in the downlink signal to the handheld device after receiving the first radio data frame and always transmits the second ACK command indicating the NACK response carried in the downlink signal after receiving third first radio data frame.

Moreover, in other embodiments, when the first transmission state indicates the on-state of the DCCH, the base station decodes the first DTCH information data and the DCCH information data carried in the first radio frame and then transmits the first ACK command carried in the downlink signal to the handheld device, and the transmission control method further comprises the following steps: receiving, by the transceiver, the first ACK command carried in the downlink signal from the base station; and terminating, by the processor, transmitting the second radio data frame via the transceiver when the first ACK command indicates an ACK response.

In the situation that the DCCH information data carried in the first and second data frames has been decoded successfully based on the first two segments of the DCCH information data, the base station further decodes the second DTCH information data and then transmits a second ACK command carried in the downlink signal to the handheld device after receiving the third radio data frame, and the transmission control method further comprises the following steps of receiving, by the transceiver, the second ACK command carried in the downlink signal from the base station; and terminating, by the processor, transmitting the fourth radio data frame via the transceiver when the second ACK command indicates the ACK response.

Conversely, when the DCCH information data carried in the first and second data frames has not been decoded successfully based on the first two segments of the DCCH information data, the base station further decodes the second DTCH information data and the DCCH information data and then transmits the second ACK command carried in the downlink signal to the handheld device, and the transmission control method further comprises the following steps: receiving, by the transceiver, the second ACK command carried in downlink signal from the base station; and terminating, by the processor, transmitting the fourth radio data frame via the transceiver when the second ACK command indicates the ACK response.

In other embodiments, the base station would not early decode the DCCH information data based on the first two segments of the DCCH information data if the first transmission state indicates the on-state of the DCCH information data, and the first ACK command always indicates the NACK response. Specifically, when the first transmission state indicates the on-state of the DCCH data, the base station transmits the first ACK command carried in the downlink signal after receiving the first radio data frame and may decode the first DTCH information data after receiving the second radio data frame. Afterwards, the base station early decodes the second DTCH information data and the DCCH information data after receiving the third radio data frame and then transmits the second ACK command carried in the downlink signal to the handheld device. In this case, the transmission control method further comprises the following steps: receiving, by the transceiver, the second ACK command carried in the downlink signal from the base station; and terminating, by the processor, transmitting the fourth radio data frame via the transceiver when the second ACK command indicates the ACK response.

In addition to the aforesaid steps, the transmission control method of the present invention can also execute all the operations and corresponding functions set forth in the first to fifth embodiment. How to execute these operations and functions will be readily appreciated by those of ordinary skill in the art based on the explanation of the first to fifth embodiments, and thus, will not be further described herein.

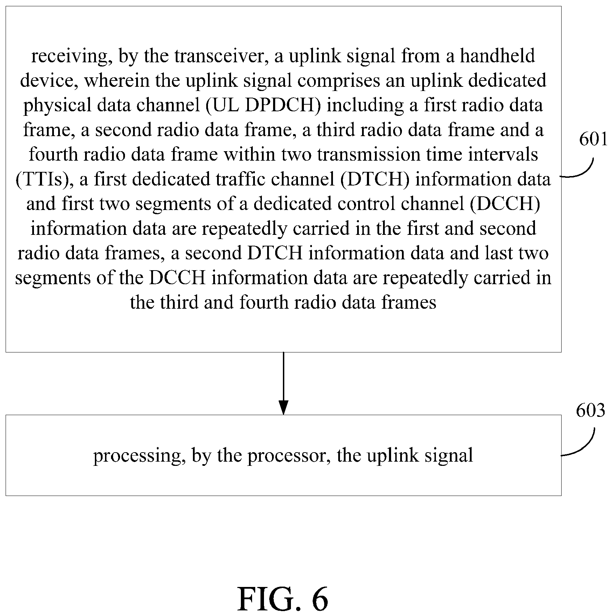

The seventh embodiment of the present invention is a transmission control method, a flowchart of which is shown in **FIG. 6****.** The transmission control method is for use in a base station, e.g., the base station **4** of the first to fifth embodiments. The base station comprises a processor and a transceiver. The transceiver is electrically connected to the processor. First, step **601** is executed by the transceiver to receive an uplink signal from a handheld device. The uplink signal comprises an uplink dedicated physical data channel (UL DPDCH) including a first radio data frame, a second radio data frame, a third radio data frame and a fourth radio data frame within two transmission time intervals (TTIs). A first dedicated traffic channel (DTCH) information data and first two segments of a dedicated control channel (DCCH) information data are repeatedly carried in the first and second radio data frames, and a second DTCH information data and last two segments of the DCCH information data are repeatedly carried in the third and fourth radio data frames. Afterwards, step **603** is executed by the processor to process the uplink signal.

In other embodiments, the uplink signal further comprises an uplink dedicated physical control channel (UL DPCCH) including a first radio control frame, a second radio control frame, a third radio control frame and a fourth radio control frame within the two TTIs. A first transport format combination indicator (TFCI) is carried in the first radio control frame to indicate a first transmission state corresponding to the first and second radio data frames, and a second TFCI is carried in the third radio control frame to indicate a second transmission state corresponding to the third and fourth radio data frames.

The transmission control method further comprises the following steps of: decoding, by the processor, the first DTCH information data when the first transmission state indicates a non-mute state of the first DTCH information and an off-state of the DCCH information data; generating, by the processor, a first acknowledgement (ACK) command according to an early decoding result of the first DTCH information data; and transmitting, by the transceiver, the ACK command carried in the downlink signal to the handheld device after receiving the first radio data frame.

Moreover, the transmission control method further comprises the following steps of decoding, by the processor, the second DTCH information data when the second transmission state indicates a non-mute state of the second DTCH information data and the off-state of the DCCH information data; generating, by the processor, a second ACK command according to an early decoding result of the second DTCH information data; and transmitting, by the transceiver, the second ACK command carried in the downlink signal to the handheld device after receiving the third radio data frame.

In another embodiment, when the first transmission state indicates the on-state of the DCCH information data, the base station would not early decode the first and second DTCH information data and the DCCH information data, and the first ACK command and the second ACK command always indicates a negative-acknowledgement (NACK) response. The transmission control method further comprises the following steps of: generating, by the processor, the first ACK command when the first transmission state indicates the on-state of the DCCH information data; transmitting, by the transceiver, the first ACK command carried in the downlink signal to the handheld device after receiving the first radio data frame; generating, by the processor, the second ACK command; transmitting, by the transceiver, the second ACK command carried in the downlink signal to the handheld device after receiving the third radio data frame.

In other embodiments, when the first transmission state indicates the on-state of the DCCH information data, the base station would early decode the first and second DTCH information data and the DCCH information data based on the first two segments of the DCCH information data. The transmission control method further comprises the following steps of: decoding, by the processor, the first DTCH information data and the DCCH information data when the first transmission state indicates an on-state of the DCCH information data; generating, by the processor, the first ACK command according to the early decoding result of the first DTCH information data and the DCCH information data; and transmitting, by the transceiver, the first ACK command carried in the downlink signal to the handheld device after receiving the first radio data frame.

When the DCCH information data carried in the first and the second data frames has been decoded successfully based on the first two segments of the DCCH information data, the transmission control method further comprises the following steps: decoding, by the processor, the second DTCH information data; generating, by the processor, the second ACK command according to an early decoding result of the second DTCH information data; and transmitting, by the transceiver, the second ACK command carried in the downlink signal to the handheld device after receiving the third radio data frame.

Conversely, when the DCCH information data carried in the first and the second data frames has not been decoded successfully based on the first two segments of the DCCH information data, the transmission control method further comprises the following steps: decoding, by the processor, the second DTCH information data and the DCCH information data; generating, by the processor, the second ACK command according to an early decoding result of the second DTCH information data and the DCCH information data; and transmitting, by the transceiver, the second ACK command carried in the downlink signal to the handheld device after receiving the third radio data frame.

Moreover, in other embodiments, the base station would not early decode the DCCH information data based on the first two segments of the DCCH information data when the first transmission state indicates the on-state of the DCCH information data, and the first ACK command always indicates the NACK response. The transmission control method further comprises the following steps: generating, by the processor, the first ACK command indicating the NACK response when the first transmission state indicates the on-state of the DCCH information data; transmitting, by the transceiver, the first ACK command carried in the downlink signal to the handheld device after receiving the first radio data frame; decoding, by the processor, the second DTCH information data and the DCCH information data; generating, by the processor, the second ACK command according to a decoding result of the second DTCH information data and the DCCH information; and transmitting, by the transceiver, the second ACK command carried in the downlink signal to the handheld device after receiving the third radio data frame.

In addition to the aforesaid steps, the transmission control method of the present invention can also execute all the operations and corresponding functions set forth in the first to fifth embodiment. How to execute these operations and functions will be readily appreciated by those of ordinary skill in the art based on the explanation of the first to fifth embodiments, and thus, will not be further described herein.

According to the above descriptions, the transmission architecture of the present invention enables the base station to early decode the DTCH information data and the DCCH information in the uplink radio data frames and to transmit the ACK command to the handheld device in time so as to achieve the uplink radio data frame early termination (FET) by terminating the transmission of the uplink radio data frame on the handheld device. Accordingly, the transmission power of the handheld device can be saved, the interference among the uplink signals can be reduced and the uplink capacity for UMTS FDD system can be greatly enhanced.

The above disclosure is related to the detailed technical contents and inventive features thereof. People skilled in this field may proceed with a variety of modifications and replacements based on the disclosures and suggestions of the invention as described without departing from the characteristics thereof. Nevertheless, although such modifications and replacements are not fully disclosed in the above descriptions, they have substantially been covered in the following claims as appended.

## Claims

1. A handheld device (2) having a processor (201) and a transceiver (203), the transceiver (203) being electrically connected to the processor (201), wherein the processor (201) generates an uplink signal (202), the uplink signal (202) comprises an uplink dedicated physical data channel, UL DPDCH, including a first radio data frame, a second radio data frame, a third radio data frame and a fourth radio data frame, the four radio data frames are within two transmission time intervals, TTIs,
wherein a complete dedicated traffic channel, DTCH, information data comprises two separate segments (X1, X2; Y1, Y2),
the handheld device (2) being **characterized in that**:
the processor (201) generates the uplink signal such that the UL DPDCH includes two separate segments (X1, X2) of a first dedicated traffic channel, DTCH, information data and first two separate segments (C1, C2) of a dedicated control channel, DCCH, information data carried in the first radio data frame and repeatedly carried in the second radio data frame, such that the data carried in the second radio data frame of the UL DPDCH is entirely the same as that carried in the first radio data frame of the UL DPDCH, two separate segments (Y1, Y2) of a second DTCH information data and last two separate segments (C3, C4) of the DCCH information data carried in the third radio data frame and repeatedly carried in the fourth radio data frame, such that the data carried in the fourth radio data frame of the UL DPDCH is entirely the same as that carried in the third radio data frame of the UL DPDCH, and the transceiver (203) transmits the uplink signal (202) to a base station (4).

2. The handheld device (2) as claimed in claim 1, wherein the uplink signal (202) further comprises an uplink dedicated physical control channel, UL DPCCH, including a first radio control frame, a second radio control frame, a third radio control frame and a fourth radio control frame, the four radio data frames are within the two TTIs, a first transport format combination indicator, TFCI, is carried in the first radio control frame to indicate a first transmission state corresponding to the first and second radio data frames, and a second TFCI is carried in the third radio control frame to indicate a second transmission state corresponding to the third and fourth radio data frames.

3. The handheld device (2) as claimed in claim 2, wherein when the first transmission state indicates a non-mute state of the first DTCH information data and an off-state of the DCCH information data, the transceiver (203) further receives a first acknowledgement, ACK, command from the base station (4), corresponding to a decoding result of the first DTCH information data and transmitted in a downlink signal to the handheld device (2) after receiving at the base station (4) the first radio data frame, and the processor (201) terminates transmitting the second radio data frame via the transceiver (203) when the first ACK command indicates an ACK response; wherein when the second transmission state indicates a non-mute state of the second DTCH information data and the off-state of the DCCH information data, the transceiver (203) further receives a second ACK command from the base station (4), corresponding to a decoding result of the second DTCH information data and transmitted in the downlink signal to the handheld device (2) after receiving at the base station (4) the third radio data frame, and the processor (201) terminates transmitting the fourth radio data frame via the transceiver (203) when the ACK command indicates the ACK response.

4. The handheld device (2) as claimed in claim 2, wherein when the first transmission state indicates an on-state of the DCCH information data, the transceiver (203) receives a first ACK command indicating a negative-acknowledgement, NACK, response, wherein the first ACK command is transmitted to the handheld device (2) after receiving at the base station (4) the first radio data frame, and a second ACK command indicating the NACK response from the base station (4), wherein the second ACK command is transmitted to the handheld device (2) after receiving at the base station (4) the third radio frame.

5. The handheld device (2) as claimed in claim 2, wherein when the first transmission state indicates an on-state of the DCCH information data, the transceiver (203) further receives a first ACK command corresponding to a decoding result of the first DTCH information data and the DCCH information data from the base station (4), wherein the first ACK command is transmitted in a downlink signal to the handheld device (2) from the base station (4) after receiving at the base station (4) the first radio frame, and the processor (201) terminates transmitting the second radio data frame via the transceiver (203) when the first ACK command indicates an ACK response; wherein the transceiver (203) further receives a second ACK command corresponding to a decoding result of the second DTCH information data and the DCCH information data from the base station (4), wherein the second ACK command is transmitted in the downlink signal to the handheld device (2) from the base station (4) after receiving at the base station (4) the third radio data frame, and the processor (201) terminates transmitting the fourth radio data frame via the transceiver (203) when the second ACK command indicates the ACK response.

6. The handheld device (2) as claimed in claim 2, wherein when the first transmission state indicates an on-state of the DCCH data, the transceiver (203) receives a first ACK command indicating a NACK response, indicating that at least one of the first DTCH information data and the DCCH information data has not been decoded successfully, and a second ACK command corresponding to a decoding result of the third radio data frame from the base station (4), and the processor (201) terminates transmitting the fourth radio data frame via the transceiver (203) when the second ACK command indicates an ACK response.

7. A transmission control method for use in a handheld device (2), the handheld device including a processor (201) and a transceiver (203), the transceiver (203) being electrically connected to the processor (201), the transmission control method comprises the following steps:
generating, by the processor (201), an uplink signal (202); and
transmitting, by the transceiver (203), the uplink signal (202) to a base station (4);
wherein the uplink signal (202) comprises an uplink dedicated physical data channel, UL DPDCH, including a first radio data frame, a second radio data frame, a third radio data frame and a fourth radio data frame, the four radio data frames are within two transmission time intervals, TTIs, wherein a complete dedicated traffic channel, DTCH, information data comprises two separate segments (X1, X2; Y1, Y2),
the transmission control method being **characterized by** generating the uplink signal such that the UL DPDCH includes two separate segments (X1, X2) of a first dedicated traffic channel,
DTCH, information data and first two separate segments (C1, C2) of a dedicated control channel, DCCH, information data carried in the first radio data frame and repeatedly carried in the second radio data frame, such that the data carried in the second radio data frame of the UL DPDCH is entirely the same as that carried in the first radio data frame of the UL DPDCH, two separate segment (Y1, Y2) of a second DTCH information data and last two separate segments (C3, C4) of the DCCH information data carried in the third radio data frame and repeatedly carried in the fourth radio data frame, such that the data carried in the fourth radio data frame of the UL DPDCH is entirely the same as that carried in the third radio data frame of the UL DPDCH.

8. A base station (4) having a transceiver (401) and a processor (403), being electrically connected to the transceiver (401), wherein the transceiver (401) receives an uplink signal (202) from a handheld device (2), wherein the uplink signal (202) comprises an uplink dedicated physical data channel, UL DPDCH, including a first radio data frame, a second radio data frame, a third radio data frame and a fourth radio data frame, the four radio data frames are within two transmission time intervals, TTIs, wherein a complete dedicated traffic channel, DTCH, information data comprises two separate segments (X1, X2; Y1, Y2);
wherein the transceiver (401) receives the UL DPDCH including two separate segments (X1, X2) of a first dedicated traffic channel, DTCH, information data and first two separate segments (C1, C2) of a dedicated control channel, DCCH, information data carried in the first radio data frame and repeatedly carried in the second radio data frame, such that the data carried in the second radio data frame of the UL DPDCH is entirely the same as that carried in the first radio data frame of the UL DPDCH, two separate segments (Y1, Y2) of a second DTCH information data and last two separate segments (C3, C4) of the DCCH information data carried in the third radio data frame and repeatedly carried in the fourth radio data frame, such that the data carried in the fourth radio data frame of the UL DPDCH is entirely the same as that carried in the third radio data frame of the UL DPDCH; the base station (4) being **characterized in that**: the processor (403) is adapted to decode the uplink signal (202).

9. The base station (4) as claimed in claim 8, wherein the uplink signal (202) further comprises an uplink dedicated physical control channel, UL DPCCH, including a first radio control frame, a second radio control frame, a third radio control frame and a fourth radio control frame, the four radio data frames are within the two TTIs, a first transport format combination indicator, TFCI. is carried in the first radio control frame to indicate a first transmission state corresponding to the first and second radio data frames, and a second TFCI is carried in the third radio control frame to indicate a second transmission state corresponding to the third and fourth radio data frames.

10. The base station (4) as claimed in claim 9, wherein when the first transmission state indicates a non-mute state of the first DTCH information and an off-state of the DCCH information data, the processor (403) further decodes the first DTCH information data and generates a first acknowledgement, ACK, command according to a decoding result of the first DTCH information data, and the transceiver (401) further transmits the first ACK command carried in a downlink signal to the handheld device (2) after receiving the first radio data frame; wherein when the second transmission state indicates a non-mute state of the second DTCH information data and the off-state of the DCCH information data, the processor (403) further decodes the second DTCH information data and generates a second ACK command according to a decoding result of the second DTCH information data, and the transceiver (401) further transmits the second ACK command carried in the downlink signal to the handheld device (2) after receiving the third radio data frame.

11. The base station (4) as claimed in claim 9, wherein when the first transmission state indicates an on-state of the DCCH information data, the processor (403) further decodes the first DTCH information data and generates a first ACK command indicating a negative-acknowledgement, NACK, response, and the transceiver (401) further transmits the first ACK command carried in a downlink signal to the handheld device (2) after receiving the first radio data frame; and wherein the processor (403) further decodes the second DTCH information data and the DCCH information data and generates a second ACK command indicating the NACK response, and the transceiver (401) further transmits the second ACK command carried in the downlink signal to the handheld device (2) after receiving the third radio data frame.

12. The base station (4) as claimed in claim 9, wherein when the first transmission state indicates an on-state of the DCCH information data, the processor (403) further decodes the first DTCH information data and the DCCH information data and generates a first ACK command according to a decoding result of the first DTCH information data and the DCCH information data, and the transceiver (401) further transmits the first ACK command carried in a downlink signal to the handheld device (2) after receiving the first radio data frame; wherein when the DCCH information data carried in the first and the second data frames has been decoded successfully based on the first two separate segments (C1, C2) of the DCCH information data, the processor (403) further decodes the second DTCH information data and generates a second ACK command according to a decoding result of the second DTCH information data, and the transceiver (401) further transmits the second ACK command carried in the downlink signal to the handheld device (2) after receiving the third radio data frame.

13. The base station (4) as claimed in claim 9, wherein when the first transmission state indicates an on-state of the DCCH information data, the processor (403) further decodes the first DTCH information data and the DCCH information data and generates a first ACK command according to a decoding result of the first DTCH information data and the DCCH information data, and the transceiver (401) further transmits the first ACK command carried in a downlink signal to the handheld device (2) after receiving the first radio data frame; wherein when the DCCH information data carried in the first and the second data frames has not been decoded successfully based on the first two separate segments (C1, C2) of the DCCH information data, the processor (403) further decodes the second DTCH information data and the DCCH information data and generates a second ACK command according to a decoding result of the second DTCH information data and the DCCH information data, and the transceiver (401) further transmits the second ACK command to the handheld device (2) carried in the downlink signal after receiving the third radio data frame.

14. The base station (4) as claimed in claim 9, wherein when the first transmission state indicates an on-state of the DCCH information data, the processor (403) further decodes the first DTCH information data and generates a first ACK command indicating a NACK response, and the transceiver (401) further transmits the first ACK command carried in the downlink signal to the handheld device (2) after receiving the first radio data frame; wherein the processor (403) further decodes the second DTCH information data and the DCCH information data after receiving the third radio data frame and then generates a second ACK command according to a decoding result of the second DTCH information data and the DCCH information, and the transceiver (401) further transmits the second ACK command carried in the downlink signal to the handheld device (2) after receiving the third radio data frame.

15. A transmission control method for use in a base station (4), the base station having a processor (403) and a transceiver (401), the transceiver (401) being electrically connected to the processor (403), the transmission control method comprises the following steps:
receiving, by the transceiver (401), an uplink signal (202) from a handheld device (2), wherein the uplink signal (202) comprises an uplink dedicated physical data channel, UL DPDCH, including a first radio data frame, a second radio data frame, a third radio data frame and a fourth radio data frame, the four radio data frames are within two transmission time intervals, TTIs, wherein a complete dedicated traffic channel, DTCH, information data comprises two separate segments (X1, X2; Y1, Y2);
and the UL DPDCH includes two separate segments (X1, X2) of a first dedicated traffic channel, DTCH, information data and first two separate segments (C1, C2) of a dedicated control channel, DCCH, information data carried in the first radio data frame and repeatedly carried in the second radio data frame, such that the data carried in the second radio data frame of the UL DPDCH is entirely the same as that carried in the first radio data frame of the UL DPDCH, two separate segments (Y1, Y2) of a second DTCH information data and last two separate segments (C3, C4) of the DCCH information data carried in the third radio data frame and repeatedly carried in the fourth radio data frame, such that the data carried in the fourth radio data frame of the UL DPDCH is entirely the same as that carried in the third radio data frame of the UL DPDCH; the transmission control method being **characterized by** decoding, by the processor (403), the uplink signal (202) and generating, by the processor (403), acknowledgement, ACK, commands corresponding to a decoding result to be transmitted, by the transceiver (401), to the handheld device (2).

## Patentansprüche

1. Tragbare Vorrichtung (2) mit einem Prozessor (201) und einem Transceiver (203), wobei der Transceiver (203) elektrisch mit dem Prozessor (201) verbunden ist, wobei
der Prozessor (201) ein Uplink-Signal (202) erzeugt, wobei das Uplink-Signal (202) einen dedizierten physikalischen Uplink-Datenkanal, UL DPDCH, umfasst, der einen ersten Funkdatenrahmen, einen zweiten Funkdatenrahmen, einen dritten Funkdatenrahmen und einen vierter Funkdatenrahmen beinhaltet, wobei die vier Funkdatenrahmen sich innerhalb zweier Übermittlungszeitintervalle, TTIs, befinden,
wobei vollständige dedizierte Verkehrskanal-, DTCH-, Informationsdaten zwei separate Segmente (X1, X2; Y1, Y2) umfassen,
wobei die tragbare Vorrichtung (2) **dadurch gekennzeichnet ist, dass**:
der Prozessor (201) das Uplink-Signal erzeugt, sodass der UL DPDCH beinhaltet:
zwei separate Segmente (X1, X2) von ersten dedizierten Verkehrskanal-, DTCH-, Informationsdaten und erste zwei separate Segmente (C1, C2) von dedizierten Steuerkanal-, DCCH-, Informationsdaten, welche in dem ersten Funkdatenrahmen übertragen werden und in dem zweiten Funkdatenrahmen wiederholt übertragen werden, sodass die in dem zweiten Funkdatenrahmen des UL DPDCH übertragenen Daten vollständig gleich zu denen, die in dem ersten Funkdatenrahmen des UL DPDCH übertragen werden, sind,
zwei separate Segmente (Y1, Y2) von zweiten DTCH-Informationsdaten und letzte zwei separate Segmente (C3, C4) der DCCH-Informationsdaten, die in dem dritten Funkdatenrahmen übertragen werden und in dem vierten Funkdatenrahmen wiederholt übertragen werden, sodass die Daten, welche in dem vierten Funkdatenrahmen des UL DPDCH übertragen werden, vollständig gleich zu denen, die in dem dritten Funkdatenrahmen des UL DPDCH übertragen werden, sind, und wobei der Transceiver (203) das Uplink-Signal (202) an eine Basisstation (4) übermittelt.

2. Tragbare Vorrichtung (2) nach Anspruch 1, wobei das Uplink-Signal (202) ferner einen dedizierten physikalischen Uplink-Steuerkanal, UL DPCCH, umfasst, der einen ersten Funksteuerrahmen, einen zweiten Funksteuerrahmen, einen dritten Funksteuerrahmen und einen vierten Funksteuerrahmen beinhaltet, wobei die vier Funksteuerrahmen innerhalb der zwei TTIs sind, wobei ein erster Transportformatkombinationsanzeiger, TFCI, in dem ersten Funksteuerrahmen übertragen wird, um einen ersten Übermittlungszustand entsprechend den ersten und zweiten Funkdatenrahmen anzuzeigen, und ein zweiter TFCI in dem dritten Funksteuerrahmen übertragen wird, um einen zweiten Übermittlungszustand anzuzeigen, die den dritten und vierten Funkdatenrahmen entsprechen.

3. Tragbare Vorrichtung (2) nach Anspruch 2, wobei, wenn der erste Übermittlungszustand einen Nicht-Stumm-Zustand der ersten DTCH-Informationsdaten und einen Aus-Zustand der DCCH-Informationsdaten anzeigt, der Transceiver (203) zusätzlich einen ersten Bestätigungs-, ACK-, Befehl von der Basisstation (4) empfängt, welcher einem Dekodierergebnis der ersten DTCH-Informationsdaten entspricht und nach Empfangen des ersten Funkdatenrahmens an der Basisstation (4) in einem Downlink-Signal an die tragbare Vorrichtung (2) übermittelt wird,
und wobei der Prozessor (201) das Übermitteln des zweiten Funkdatenrahmens mittels des Transceivers (203) beendet, wenn der erste ACK-Befehl eine ACK-Antwort anzeigt; wobei, wenn der zweite Übermittlungszustand einen Nicht-Stumm-Zustand der zweiten DTCH-Informationsdaten und den Aus-Zustand der DCCH-Informationsdaten anzeigt, der Transceiver (203) ferner einen zweiten ACK-Befehl von der Basisstation (4) entsprechend einem Dekodierergebnis der zweiten DTCH-Informationsdaten empfängt, welches nach Empfang des ersten Funkdatenrahmens an der Basisstation (4) in einem Downlink-Signal an die tragbare Vorrichtung (2) übermittelt wurde, und wobei der Prozessor (201) das Übermitteln des vierten Funkdatenrahmens mittels des Transceivers (203) beendet, wenn der ACK-Befehl eine ACK-Antwort anzeigt.

4. Tragbare Vorrichtung (2) nach Anspruch 2, wobei, wenn der erste Übermittlungszustand einen Ein-Zustand der DCCH-Informationsdaten anzeigt, der Transceiver (203) einen ersten ACK-Befehl empfängt, der eine negative Bestätigung, NACK, anzeigt, wobei der erste ACK-Befehl nach Empfangen des ersten Funkdatenrahmens an der Basisstation (4) an die tragbare Vorrichtung (2) übermittelt wird und einen zweiten ACK-Befehl empfängt, der die NACK-Antwort von der Basisstation (4) anzeigt, wobei der zweite ACK-Befehl nach Empfang des dritten Funkdatenrahmens an der Basisstation (4) übermittelt wird.

5. Tragbare Vorrichtung (2) nach Anspruch 2, wobei, wenn der erste Übermittlungszustand einen Ein-Zustand der DCCH-Informationsdaten anzeigt, der Transceiver (203) ferner einen ersten ACK-Befehl entsprechend einem Dekodierergebnis der ersten DTCH-Informationsdaten und der DCCH-Informationsdaten von der Basisstation (4) empfängt, wobei der erste ACK-Befehl nach Empfang des ersten Funkdatenrahmens an der Basisstation (4) in einem Downlink-Signal an die tragbare Vorrichtung (2) von der Basisstation (4) übermittelt wird,
und wobei der Prozessor (201) das Übertragen des zweiten Funkdatenrahmens mittels des Transceivers (203) beendet, wenn der erste ACK-Befehl eine ACK-Antwort anzeigt; wobei der Transceiver (203) ferner einen zweiten ACK-Befehl entsprechend einem Dekodierergebnis der zweiten DTCH-Informationsdaten und der DCCH-Informationsdaten von der Basisstation (4) empfängt, wobei der zweite ACK-Befehl nach Empfang des dritten Funkdatenrahmens an der Basisstation (4) in dem Downlink-Signal an die tragbare Vorrichtung (2) von der Basisstation(4) übermittelt wird,
und wobei der Prozessor (201) das Übertragen des vierten Funkdatenrahmens mittels des Transceivers (203) beendet, wenn der zweite ACK-Befehl die ACK-Antwort anzeigt.

6. Tragbare Vorrichtung (2) nach Anspruch 2, wobei, wenn der erste Übermittlungszustand einen Ein-Zustand der DCCH-Daten anzeigt, der Transceiver (203) einen ersten ACK-Befehl empfängt, der eine NACK-Antwort anzeigt, die anzeigt, dass zumindest eine von den ersten DTCH-Informationsdaten und den DCCH-Informationsdaten nicht erfolgreich dekodiert wurde, und einen zweiten ACK-Befehl empfängt, der einem Dekodierergebnis des dritten Funkdatenrahmens von der Basisstation (4) entspricht, und wobei der Prozessor (201) das Senden des vierten Funkdatenrahmens mittels des Transceivers (203) beendet, wenn der zweite ACK-Befehl eine ACK-Antwort anzeigt.

7. Übermittlungssteuerverfahren zur Verwendung in einer tragbaren Vorrichtung (2), wobei die tragbare Vorrichtung einen Prozessor (201) und einen Transceiver (203) beinhaltet, wobei der Transceiver (203) mit dem Prozessor (201) elektrisch verbunden ist, wobei das Übermittlungssteuerverfahren die folgenden Schritte umfasst:
Erzeugen eines Uplink-Signals (202) durch den Prozessor (201); und
Übermitteln des Uplink-Signals (202) durch den Transceiver (203) an eine Basisstation (4);
wobei das Uplink-Signal (202) einen dedizierten physikalischen Uplink-Datenkanal, UL DPDCH umfasst, der einen ersten Funkdatenrahmen, einen zweiten Funkdatenrahmen, einen dritten Funkdatenrahmen und einen vierten Funkdatenrahmen beinhaltet, wobei die vier Funkdatenrahmen sich innerhalb zweier Übermittlungszeitintervalle, TTIs, befinden, wobei vollständige dedizierte Verkehrskanal-, DTCH-, Informationsdaten zwei separate Segmente (X1, X2; Y1, Y2) umfassen,
wobei das Übermittlungssteuerverfahren **dadurch gekennzeichnet ist, dass**
das Uplink-Signal so erzeugt wird, dass der UL DPDCH beinhaltet:
zwei separate Segmente (X1, X2) von ersten dedizierten Verkehrskanal-, DTCH-, Informationsdaten und erste zwei separate Segmente (C1, C2) von dedizierten Kontrollkanal-, DCCH-, Informationsdaten, welche in dem ersten Funkdatenrahmen übertragen werden und in dem zweiten Funkdatenrahmen wiederholt übertragen werden, sodass die in dem zweiten Funkdatenrahmen des UL DPDCH übertragenen Daten vollständig gleich zu denen, die in dem ersten Funkdatenrahmen des UL DPDCH übertragen werden, sind,
zwei separate Segmente (Y1, Y2) von zweiten DTCH-Informationsdaten und letzte zwei separate Segmente (C3, C4) der DCCH-Informationsdaten, die in dem dritten Funkdatenrahmen übertragen werden und in dem vierten Funkdatenrahmen wiederholt übertragen werden, sodass die Daten, welche in dem vierten Funkdatenrahmen des UL DPDCH übertragen werden, vollständig gleich zu denen, die in dem dritten Funkdatenrahmen des UL DPDCH übertragen werden, sind.

8. Basisstation (4), einen Transceiver (401) und einen Prozessor (403) aufweisend, der elektrisch mit dem Transceiver (401) verbunden ist, wobei
der Transceiver (401) ein Uplink-Signal (202) von einer tragbaren Vorrichtung (2) empfängt, wobei das Uplink-Signal (202) einen dedizierten physikalischen Uplink-Datenkanal, UL DPDCH, umfasst, der einen ersten Funkdatenrahmen, einen zweiten Funkdatenrahmen, einen dritten Funkdatenrahmen und einen vierten Funkdatenrahmen beinhaltet, wobei die vier Funkdatenrahmen sich innerhalb zweier Übermittlungszeitintervalle, TTIs, befinden, wobei vollständige dedizierte Verkehrskanal-, DTCH, Informationsdaten zwei separate Segmente (X1, X2; Y1, Y2) umfassen;
wobei der Transceiver (401) den UL DPDCH empfängt, welcher beinhaltet:
zwei separate Segmente (X1, X2) von ersten dedizierten Verkehrskanal-, DTCH-, Informationsdaten und erste zwei separate Segmente (C1, C2) von dedizierten Kontrollkanal-, DCCH-, Informationsdaten, welche in dem ersten Funkdatenrahmen übertragen werden und in dem zweiten Funkdatenrahmen wiederholt übertragen werden, sodass die in dem zweiten Funkdatenrahmen des UL DPDCH übertragenen Daten vollständig gleich zu denen, die in dem ersten Funkdatenrahmen des UL DPDCH übertragen werden, sind,
zwei separate Segmente (Y1, Y2) von zweiten DTCH-Informationsdaten und letzte zwei separate Segmente (C3, C4) der DCCH-Informationsdaten, die in dem dritten Funkdatenrahmen übertragen werden und in dem vierten Funkdatenrahmen wiederholt übertragen werden, sodass die Daten, welche in dem vierten Funkdatenrahmen des UL DPDCH übertragen werden, vollständig gleich zu denen, die in dem dritten Funkdatenrahmen des UL DPDCH übertragen werden, sind;
wobei die Basisstation (4) **dadurch gekennzeichnet ist, dass**:
der Prozessor (403) eingerichtet ist, das Uplink-Signal (202) zu dekodieren.

9. Basisstation (4) gemäß Anspruch 8, wobei das Uplink-Signal (202) ferner einen dedizierten physikalischen Uplink-Steuerkanal, UL DPCCH, umfasst, der einen ersten Funksteuerrahmen, einen zweiten Funksteuerrahmen, einen dritten Funksteuerrahmen und einen vierten Funksteuerrahmen beinhaltet, wobei die vier Funksteuerrahmen innerhalb der zwei TTIs liegen, wobei ein erster Transportformatkombinationsanzeiger, TFCI, in dem ersten Funksteuerrahmen übertragen wird, um einen ersten Übermittlungszustand entsprechend den ersten und zweiten Funksteuerrahmen anzuzeigen, und ein zweiter TFCI in dem dritten Funksteuerrahmen übertragen wird, um einen zweiten Übermittlungszustand anzuzeigen, der dem dritten und vierten Funkdatenrahmen entspricht.

10. Basisstation (4) nach Anspruch 9, wobei, wenn der erste Übermittlungszustand einen Nicht-Stumm-Zustand der ersten DTCH-Informationsdaten und einen Aus-Zustand der DCCH-Informationsdaten anzeigt, der Prozessor (403) zusätzlich die ersten DTCH-Informationsdaten dekodiert und einen ersten Bestätigungs-, ACK-, Befehl entsprechend einem Dekodierergebnis der ersten DTCH-Informationsdaten erzeugt, und wobei der Transceiver (401) ferner den ersten ACK-Befehl, welcher nach Empfangen des ersten Funkdatenrahmens mittels eines Downlink-Signals an die tragbare Vorrichtung (2) übertragen wird, übermittelt; wobei, wenn der zweite Übermittlungszustand einen Nicht-Stumm-Zustand der zweiten DTCH-Informationsdaten und den Aus-Zustand der DCCH-Informationsdaten anzeigt, der Prozessor (403) zusätzlich die zweiten DTCH-Informationsdaten dekodiert und einen zweiten ACK-Befehl entsprechend einem Dekodierergebnis der zweiten DTCH-Informationsdaten erzeugt, und wobei der Transceiver (401) ferner den zweiten ACK-Befehl, welcher nach Empfangen des dritten Funkdatenrahmens mittels eines Downlink-Signals an die tragbare Vorrichtung (2) übertragen wird, übermittelt.

11. Basisstation (4) nach Anspruch 9, wobei, wenn der erste Übermittlungszustand einen Ein-Zustand der DCCH-Informationsdaten anzeigt, der Prozessor (403) ferner die ersten DTCH-Informationsdaten dekodiert und einen ersten ACK-Befehl erzeugt, der eine negative Bestätigung-, NACK-, Antwort anzeigt, und wobei der Transceiver (401) ferner nach Empfang des ersten Funkdatenrahmens den ersten ACK-Befehl, der in einem Downlink-Signal übertragen wird, an die tragbare Vorrichtung (2), übermittelt; und wobei der Prozessor (403) ferner die zweiten DTCH-Informationsdaten und die DCCH-Informationsdaten dekodiert und einen zweiten ACK-Befehl, der die NACK-Antwort anzeigt, erzeugt, und wobei der Transceiver (401) nach Empfang des dritten Funkdatenrahmens ferner den zweiten ACK-Befehl, der in dem Downlink-Signal übertragen wird, an die tragbare Vorrichtung (2) übermittelt.

12. Basisstation (4) nach Anspruch 9, wobei, wenn der erste Übermittlungszustand einen Ein-Zustand der DCCH-Informationsdaten anzeigt, der Prozessor (403) ferner die ersten DTCH-Informationsdaten und die DCCH-Informationsdaten dekodiert und einen ersten ACK-Befehl, der einem Dekodierergebnis der ersten DTCH-Informationsdaten und der DCCH-Informationsdaten entspricht, erzeugt, und wobei der Transceiver (401) ferner nach Empfang des ersten Funkdatenrahmens den ersten ACK-Befehl, der in dem Downlink-Signal übertragen wird, an die tragbare Vorrichtung (2) übermittelt; wobei, wenn die DCCH-Informationsdaten, die in den ersten und zweiten Datenrahmen übertragen werden, erfolgreich dekodiert wurden, basierend auf den ersten zwei separaten Segmenten (C1, C2) der DCCH-Informationsdaten, der Prozessor (403) ferner die zweiten DTCH-Informationsdaten dekodiert und einen zweiten ACK-Befehl entsprechend einem Dekodierergebnis der zweiten DTCH-Informationsdaten erzeugt, und wobei der Transceiver (401) ferner nach Empfang des dritten Funkdatenrahmens den zweiten ACK-Befehl, der in dem Downlink-Signal übertragen wird, an die tragbare Vorrichtung (2) übermittelt.

13. Basisstation (4) nach Anspruch 9, wobei, wenn der erste Übermittlungszustand einen Ein-Zustand der DCCH-Informationsdaten anzeigt, der Prozessor (403) ferner die ersten DTCH-Informationsdaten und die DCCH-Informationsdaten dekodiert und einen ersten ACK-Befehl entsprechend einem Dekodierergebnis der ersten DTCH-Informationsdaten und der DCCH-Informationsdaten erzeugt, und wobei der Transceiver (401) ferner nach Empfang des ersten Funkdatenrahmens den ersten ACK-Befehl, der in einem Downlink-Signal übertragen wird, an die tragbare Vorrichtung (2) übermittelt; wobei, wenn die DCCH-Informationsdaten, die in dem ersten und dem zweiten Datenrahmen übertragen werden, basierend auf den ersten zwei separaten Segmenten (C1, C2) der DCCH-Informationsdaten, nicht erfolgreich dekodiert wurden, der Prozessor (403) ferner die zweiten DTCH-Informationsdaten und die DCCH-Informationsdaten dekodiert und einen zweiten ACK-Befehl entsprechend einem Dekodierergebnis der zweiten DTCH-Informationsdaten und der DCCH-Informationsdaten erzeugt, und wobei der Transceiver (401) ferner nach dem Empfang des dritten Funkdatenrahmens den zweiten ACK-Befehl, der in dem Downlink-Signal übertragen wird, an die tragbare Vorrichtung (2) übermittelt.

14. Basisstation (4) nach Anspruch 9, wobei, wenn der erste Übermittlungszustand einen Ein-Zustand der DCCH-Informationsdaten anzeigt, der Prozessor (403) ferner die ersten DTCH-Informationsdaten dekodiert und einen ersten ACK-Befehl erzeugt, der eine NACK-Antwort anzeigt, und wobei der Transceiver (401) nach dem Empfang des ersten Funkdatenrahmens ferner den ersten ACK-Befehl, der in dem Downlink-Signal übertragen wird, an die tragbare Vorrichtung (2) übermittelt; wobei der Prozessor (403) ferner die zweiten DTCH-Informationsdaten und die DCCH-Informationsdaten nach dem Empfang des dritten Funkdatenrahmens dekodiert und dann einen zweiten ACK-Befehl entsprechend einem Dekodierergebnis der zweiten DTCH-Informationsdaten und der DCCH-Informationsdaten erzeugt, und wobei der Transceiver (401) nach Empfang des dritten Funkdatenrahmens den zweiten ACK-Befehl, der in dem Downlink-Signal übertragen wird, an die tragbare Vorrichtung (2) übermittelt.

15. Übermittlungssteuerverfahren zur Verwendung in einer Basisstation (4), wobei die Basisstation einen Prozessor (403) und einen Transceiver (401) aufweist, wobei der Transceiver (401) mit dem Prozessor (403) elektrisch verbunden ist, wobei das Übermittlungssteuerverfahren die folgenden Schritte umfasst:
Empfangen eines Uplink-Signals (202) von einer tragbaren Vorrichtung (2) durch den Transceiver (401), wobei das Uplink-Signal (202) einen dedizierten physikalischen Uplink-Datenkanal, UL DPDCH, umfasst, der einen ersten Funkdatenrahmen, einen zweiten Funkdatenrahmen, einen dritten Funkdatenrahmen und einen vierten Funkdatenrahmen beinhaltet, wobei die vier Funkdatenrahmen sich innerhalb zweier Übermittlungszeitintervalle, TTIs, befinden, wobei vollständige dedizierte Verkehrskanal-, DTCH-, Informationsdaten zwei separate Segmente (X1, X2; Y1, Y2) umfassen,
wobei der UL DPDCH beinhaltet:
zwei separate Segmente (X1, X2) von ersten dedizierten Verkehrskanal-, DTCH-, Informationsdaten und erste zwei separate Segmente (C1, C2) von dedizierten Steuerkanal-, DCCH-, Informationsdaten, welche in dem ersten Funkdatenrahmen übertragen werden und in dem zweiten Funkdatenrahmen wiederholt übertragen werden, sodass die in dem zweiten Funkdatenrahmen des UL DPDCH übertragenen Daten vollständig gleich zu denen, die in dem ersten Funkdatenrahmen des UL DPDCH übertragen werden, sind,
zwei separate Segmente (Y1, Y2) von zweiten DTCH-Informationsdaten und letzte zwei separate Segmente (C3, C4) der DCCH-Informationsdaten, die in dem dritten Funkdatenrahmen übertragen werden und in dem vierten Funkdatenrahmen wiederholt übertragen werden, sodass die Daten, welche in dem vierten Funkdatenrahmen des UL DPDCH übertragen werden, vollständig gleich zu denen, die in dem dritten Funkdatenrahmen des UL DPDCH übertragen werden, sind;
wobei das Übermittlungssteuerverfahren **gekennzeichnet ist durch**
Dekodieren des Uplink-Signals (202) durch den Prozessor (403) und
Erzeugen von Bestätigungs-, ACK-, Befehlen durch den Prozessor (403), die einem von dem Transceiver (401) an die tragbare Vorrichtung (2) zu übermittelndem Dekodierergebnis entsprechen.

## Revendications

1. Dispositif portatif (2) comprenant un processeur (201) et un émetteur-récepteur (203), l'émetteur-récepteur (203) étant raccordé électriquement au processeur (201), dans lequel
le processeur (201) génère un signal de liaison montante (202), le signal de liaison montante (202) comprend un canal de données physiques dédié de liaison montante, UL DPDCH, comprenant une première trame de données radio, une deuxième trame de données radio, une troisième trame de données radio et une quatrième trame de données radio, les quatre trames de données radio sont à l'intérieur de deux intervalles de temps de transmission, TTI,
dans lequel des données d'information de canal de trafic dédié, DTCH, complètes comprennent deux segments distincts (X1, X2 ; Y1, Y2),
le dispositif portatif (2) étant **caractérisé en ce que** :
le processeur (201) génère le signal de liaison montante de sorte que l'UL DPDCH comprenne deux segments distincts (X1, X2) d'une première donnée d'information de canal de trafic dédié, DTCH, et deux premiers segments distincts (C1, C2) d'une donnée d'information de canal de commande dédié, DCCH, portée dans la première trame de données radio et portée à répétition dans la deuxième trame de données radio, de sorte que les données portées dans la deuxième trame de données radio de l'UL DPDCH soient entièrement identiques à celles portées dans la première trame de données radio de l'UL DPDCH, deux segments distincts (Y1, Y2) d'une deuxième donnée d'information DTCH et derniers deux segments distincts (C3, C4) des données d'information DCCH portées dans la troisième trame de données radio et portées à répétition dans la quatrième trame de données radio, de sorte que les données portées dans la quatrième trame de données radio de l'UL DPDCH soient entièrement identiques à celles portées dans la troisième trame de données radio de l'UL DPDCH, et l'émetteur-récepteur (203) transmet le signal de liaison montante (202) à destination d'une station de base (4) .

2. Dispositif portatif (2) selon la revendication 1, dans lequel le signal de liaison montante (202) comprend en outre un canal de commande physique dédié de liaison montante, UL DPCCH, comprenant une première trame de commande radio, une deuxième trame de commande radio, une troisième trame de commande radio et une quatrième trame de commande radio, les quatre trames de commande radio sont à l'intérieur des deux TTI, un premier indicateur de combinaison de formats de transport, TFCI, est porté dans la première trame de commande radio pour indiquer un premier état de transmission correspondant aux première et deuxième trames de données radio, et un deuxième TFCI est porté dans la troisième trame de commande radio pour indiquer un deuxième état de transmission correspondant aux troisième et quatrième trames de données radio.

3. Dispositif portatif (2) selon la revendication 2, dans lequel, lorsque le premier état de transmission indique un état non silencieux de la première donnée d'information DTCH et un état désactivé des données d'information DCCH, l'émetteur-récepteur (203) reçoit en outre une première commande d'accusé de réception, ACK, en provenance de la station de base (4), correspondant à un résultat de décodage de la première donnée d'information DTCH et transmise dans un signal de liaison descendante à destination du dispositif portatif (2) après la réception, à la station de base (4), de la première trame de données radio, et le processeur (201) termine la transmission de la deuxième trame de données radio par l'intermédiaire de l'émetteur-récepteur (203) lorsque la première commande ACK indique une réponse ACK ; dans lequel, lorsque le deuxième état de transmission indique un état non silencieux de la deuxième donnée d'information DTCH et l'état désactivé des données d'information DCCH, l'émetteur-récepteur (203) reçoit en outre une deuxième commande ACK en provenance de la station de base (4), correspondant à un résultat de décodage de la deuxième donnée d'information DTCH et transmise dans le signal de liaison descendante à destination du dispositif portatif (2) après la réception, à la station de base (4), de la troisième trame de données radio, et le processeur (201) termine la transmission de la quatrième trame de données radio par l'intermédiaire de l'émetteur-récepteur (203) lorsque la commande ACK indique la réponse ACK.

4. Dispositif portatif (2) selon la revendication 2, dans lequel, lorsque le premier état de transmission indique un état activé des données d'information DCCH, l'émetteur-récepteur (203) reçoit une première commande ACK indiquant une réponse d'accusé de réception négatif, NACK, dans lequel la première commande ACK est transmise au dispositif portatif (2) après la réception, à la station de base (4), de la première trame de données radio, et une deuxième commande ACK indiquant la réponse NACK de la station de base (4), dans lequel la deuxième commande ACK est transmise à destination du dispositif portatif (2) après la réception, à la station de base (4), de la troisième trame de données radio.

5. Dispositif portatif (2) selon la revendication 2, dans lequel, lorsque le premier état de transmission indique un état activé des données d'information DCCH, l'émetteur-récepteur (203) reçoit en outre une première commande ACK correspondant à un résultat de décodage de la première donnée d'information DTCH et des données d'information DCCH en provenance de la station de base (4), dans lequel la première commande ACK est transmise dans un signal de liaison descendante au dispositif portatif (2) depuis la station de base (4) après la réception, à la station de base (4), de la première trame de données radio,
et le processeur (201) termine la transmission de la deuxième trame de donnée radio par l'intermédiaire de l'émetteur-récepteur (203) lorsque la première commande ACK indique une réponse ACK ; dans lequel l'émetteur-récepteur (203) reçoit en outre une deuxième commande ACK correspondant à un résultat de décodage de la deuxième donnée d'information DTCH et des données d'information DCCH en provenance de la station de base (4), dans lequel la deuxième commande ACK est transmise dans le signal de liaison descendante à destination du dispositif portatif (2) depuis la station de base (4) après la réception, à la station de base (4), de la troisième trame de données radio,
et le processeur (201) termine la transmission de la quatrième trame de données radio par l'intermédiaire de l'émetteur-récepteur (203) lorsque la deuxième commande ACK indique la réponse ACK.

6. Dispositif portatif (2) selon la revendication 2, dans lequel, lorsque le premier état de transmission indique un état activé des données DCCH, l'émetteur-récepteur (203) reçoit une première commande ACK indiquant une réponse NACK, indiquant qu'au moins l'une de la première donnée d'information DTCH et des données d'information DCCH n'a pas été décodée avec succès, et une deuxième commande ACK correspondant à un résultat de décodage de la troisième trame de données radio en provenance de la station de base (4), et le processeur (201) termine la transmission de la quatrième trame de données radio par l'intermédiaire de l'émetteur-récepteur (203) lorsque la deuxième commande ACK indique une réponse ACK.

7. Procédé de commande de transmission destiné à être utilisé dans un dispositif portatif (2), le dispositif portatif comprenant un processeur (201) et un émetteur-récepteur (203), l'émetteur-récepteur (203) étant raccordé électriquement au processeur (201), le procédé de commande de transmission comprenant les étapes suivantes :
la génération, par le processeur (201), d'un signal de liaison montante (202) ; et
la transmission, par l'émetteur-récepteur (203), du signal de liaison montante (202) à destination d'une station de base (4) ;
dans lequel le signal de liaison montante (202) comprend un canal de données physiques dédié de liaison montante, UL DPDCH, comprenant une première trame de données radio, une deuxième trame de données radio, une troisième trame de données radio et une quatrième trame de données radio, les quatre trames de données radio sont à l'intérieur de deux intervalles de temps de transmission, TTI, dans lequel des données d'information de canal de trafic dédié, DTCH, complètes comprennent deux segments distincts (X1, X2 ; Y1, Y2),
le procédé de commande de transmission étant **caractérisé par** :
la génération du signal de liaison montante de sorte que l'UL DPDCH comprenne deux segments distincts (X1, X2) d'une première donnée d'information de canal de trafic dédié, DTCH, et deux premiers segments distincts (C1, C2) d'une donnée d'information de canal de commande dédié, DCCH, portée dans la première trame de données radio et portée à répétition dans la deuxième trame de données radio, de sorte que les données portées dans la deuxième trame de données radio de l'UL DPDCH soient entièrement identiques à celles portées dans la première trame de données radio de l'UL DPDCH, deux segments distincts (Y1, Y2) d'une deuxième donnée d'information DTCH et derniers deux segments distincts (C3, C4) des données d'information DCCH portées dans la troisième trame de données radio et portées à répétition dans la quatrième trame de données radio, de sorte que les données portées dans la quatrième trame de données radio de l'UL DPDCH soient entièrement identiques à celles portées dans la troisième trame de données radio de l'UL DPDCH.

8. Station de base (4) comprenant un émetteur-récepteur (401) et un processeur (403), qui est raccordé électriquement à l'émetteur-récepteur (401), dans lequel
l'émetteur-récepteur (401) reçoit un signal de liaison montante (202) en provenance d'un dispositif portatif (2), dans lequel le signal de liaison montante (202) comprend un canal de données physiques dédié de liaison montante, UL DPDCH, comprenant une première trame de données radio, une deuxième trame de données radio, une troisième trame de données radio et une quatrième trame de données radio, les quatre trames de données radio sont à l'intérieur de deux intervalles de temps de transmission, TTI, dans lequel des données d'information de canal de trafic dédié, DTCH, complètes comprennent deux segments distincts (X1, X2 ; Y1, Y2) ;
dans laquelle l'émetteur-récepteur (401) reçoit l'UL DPDCH comprenant deux segments distincts (X1, X2) d'une première donnée d'information de canal de trafic dédié, DTCH, et deux premiers segments distincts (C1, C2) d'une donnée d'information de canal de commande dédié, DCCH, portée dans la première trame de données radio et portée à répétition dans la deuxième trame de données radio, de sorte que les données portées dans la deuxième trame de données radio de l'UL DPDCH soient entièrement identiques à celles portées dans la première trame de données radio de l'UL DPDCH, deux segments distincts (Y1, Y2) d'une deuxième donnée d'information DTCH et derniers deux segments distincts (C3, C4) des données d'information DCCH portées dans la troisième trame de données radio et portées à répétition dans la quatrième trame de données radio, de sorte que les données portées dans la quatrième trame de données radio de l'UL DPDCH soient entièrement identiques à celles portées dans la troisième trame de données radio de l'UL DPDCH ;
la station de base (4) étant **caractérisée en ce que** :
le processeur (403) est apte à décoder le signal de liaison montante (202).

9. Station de base (4) selon la revendication 8, dans laquelle le signal de liaison montante (202) comprend en outre un canal de commande physique dédié de liaison montante, UL DPCCH, comprenant une première trame de commande radio, une deuxième trame de commande radio, une troisième trame de commande radio et une quatrième trame de commande radio, les quatre trames de comande radio sont à l'intérieur des deux TTI, un premier indicateur de combinaison de formats de transport, TFCI, est porté dans la première trame de commande radio pour indiquer un premier état de transmission correspondant aux première et deuxième trames de données radio, et un deuxième TFCI est porté dans la troisième trame de commande radio pour indiquer un deuxième état de transmission correspondant aux troisième et quatrième trames de données radio.

10. Station de base (4) selon la revendication 9, dans laquelle, lorsque le premier état de transmission indique un état non silencieux de la première donnée d'information DTCH et un état désactivé des données d'information DCCH, le processeur (403) décode en outre la première donnée d'information DTCH et génère une première commande d'accusé de réception, ACK, en fonction d'un résultat de décodage de la première donnée d'information DTCH et l'émetteur-récepteur (401) transmet en outre la première commande ACK portée dans un signal de liaison descendante à destination du dispositif portatif (2) après la réception de la première trame de données radio ; dans laquelle, lorsque le deuxième état de transmission indique un état non silencieux de la deuxième donnée d'information DTCH et l'état désactivé des données d'information DCCH, le processeur (403) décode en outre la deuxième donnée d'information DTCH et génère une deuxième commande ACK en fonction d'un résultat de décodage de la deuxième donnée d'information DTCH, et l'émetteur-récepteur (401) transmet en outre la deuxième commande ACK portée dans le signal de liaison descendante à destination du dispositif portatif (2) après la réception de la troisième trame de données radio.

11. Station de base (4) selon la revendication 9, dans laquelle, lorsque le premier état de transmission indique un état activé des données d'information DCCH, le processeur (403) décode en outre la première donnée d'information DTCH et génère une première commande ACK indiquant une réponse d'accusé de réception négatif, NACK, dans laquelle la première commande ACK, et l'émetteur-récepteur (401) transmet en outre la première commande ACK portée dans un signal de liaison descendante à destination du dispositif portatif (2) après la réception de la première trame de données radio ; et dans laquelle le processeur (403) décode en outre la deuxième donnée d'information DTCH et les données d'information DCCH et génère une deuxième commande ACK indiquant la réponse NACK, et l'émetteur-récepteur (401) transmet en outre la deuxième commande ACK portée dans le signal de liaison descendante à destination du dispositif portatif (2) après la réception de la troisième trame de données radio.

12. Station de base (4) selon la revendication 9, dans laquelle, lorsque le premier état de transmission indique un état activé des données d'information DCCH, le processeur (403) décode en outre la première donnée d'information DTCH et les données d'information DCCH et génère une première commande ACK en fonction d'un résultat de décodage de la première donnée d'information DTCH et des données d'information DCCH, et l'émetteur-récepteur (401) transmet en outre la première commande ACK portée dans un signal de liaison descendante à destination du dispositif portatif (2) après la réception de la première trame de données radio ; dans laquelle, lorsque les données d'information DCCH portées dans les première et deuxième trames de données ont été décodées avec succès sur la base des deux premiers segments distincts (C1, C2) des données d'information DCCH, le processeur (403) décode en outre la deuxième donnée d'information DTCH et génère une deuxième commande ACK en fonction d'un résultat de décodage de la deuxième donnée d'information DTCH, et l'émetteur-récepteur (401) transmet en outre la deuxième commande ACK portée dans le signal de liaison descendante à destination du dispositif portatif (2) après la réception de la troisième trame de donnée radio.

13. Station de base (4) selon la revendication 9, dans laquelle, lorsque le premier état de transmission indique un état activé des données d'information DCCH, le processeur (403) décode en outre la première donnée d'information DTCH et les données d'information DCCH et génère une première commande ACK en fonction d'un résultat de décodage de la première donnée d'information DTCH et des données d'information DCCH, et l'émetteur-récepteur (401) transmet en outre la première commande ACK portée dans un signal de liaison descendante à destination du dispositif portatif (2) après la réception de la première trame de données radio ; dans laquelle, lorsque les données d'information DCCH portées dans les première et deuxième trames de données n'ont pas été décodées avec succès sur la base des deux premiers segments distincts (C1, C2) des données d'information DCCH, le processeur (403) décode en outre la deuxième donnée d'information DTCH et les données d'information DCCH et génère une deuxième commande ACK en fonction d'un résultat de décodage de la deuxième donnée d'information DTCH et des données d'information DCCH, et l'émetteur-récepteur (401) transmet en outre la deuxième commande ACK portée dans le signal de liaison descendante à destination du dispositif portatif (2) après la réception de la troisième trame de donnée radio.

14. Station de base (4) selon la revendication 9, dans laquelle, lorsque le premier état de transmission indique un état activé des données d'information DCCH, le processeur (403) décode en outre la première donnée d'information DTCH et génère une première commande ACK indiquant une réponse NACK, et l'émetteur-récepteur (401) transmet en outre la première commande ACK portée dans le signal de liaison descendante à destination du dispositif portatif (2) après la réception de la première trame de données radio ; dans laquelle le processeur (403) décode en outre la deuxième donnée d'information DTCH et les données d'information DCCH après la réception de la troisième trame de données radio puis génère une deuxième commande ACK en fonction d'un résultat de décodage de la deuxième donnée d'information DTCH et des données d'information DCCH, et l'émetteur-récepteur (401) transmet en outre la deuxième commande ACK portée dans le signal de liaison descendante à destination du dispositif portatif (2) après la réception de la troisième trame de donnée radio.

15. Procédé de commande de transmission destiné à être utilisé dans une station de base (4), la station de base comprenant un processeur (403) et un émetteur-récepteur (401), l'émetteur-récepteur (401) étant raccordé électriquement au processeur (403), le procédé de commande de transmission comprenant les étapes suivantes :
la réception, par l'émetteur-récepteur (401), d'un signal de liaison montante (202) en provenance d'un dispositif portatif (2) ;
dans lequel le signal de liaison montante (202) comprend un canal de données physiques dédié de liaison montante, UL DPDCH, comprenant une première trame de données radio, une deuxième trame de données radio, une troisième trame de données radio et une quatrième trame de données radio, les quatre trames de données radio sont à l'intérieur de deux intervalles de temps de transmission, TTI, dans lequel des données d'information de canal de trafic dédié, DTCH, complètes comprennent deux segments distincts (X1, X2 ; Y1, Y2) ; et
l'UL DPDCH comprend deux segments distincts (X1, X2) d'une première donnée d'information de canal de trafic dédié, DTCH, et deux premiers segments distincts (C1, C2) d'une donnée d'information de canal de commande dédié, DCCH, portée dans la première trame de données radio et portée à répétition dans la deuxième trame de données radio, de sorte que les données portées dans la deuxième trame de données radio de l'UL DPDCH soient entièrement identiques à celles portées dans la première trame de données radio de l'UL DPDCH, deux segments distincts (Y1, Y2) d'une deuxième donnée d'information DTCH et au moins deux segments distincts (C3, C4) des données d'information DCCH portées dans la troisième trame de données radio et portées à répétition dans la quatrième trame de données radio, de sorte que les données portées dans la quatrième trame de données radio de l'UL DPDCH soient entièrement identiques à celles portées dans la troisième trame de données radio de l'UL DPDCH ;
le procédé de commande de transmission étant **caractérisé par** :
le décodage, par le processeur (403), du signal de liaison montante (202) ; et
la génération, par le processeur (403), de commandes d'accusé de réception, ACK, correspondant à un résultat de décodage à transmettre, par l'émetteur-récepteur (401), à destination du dispositif portatif (2).
